# EUROPÄISCHE PATENTSCHRIFT

(11) **EP 1 260 752 B1**
(45) Veröffentlichungstag und Bekanntmachung des Hinweises auf die Patenterteilung: **11.10.2006**
(21) Anmeldenummer: 02009513.9
(22) Anmeldetag: 26.04.2002
(51) Int. Cl.: F16L 37/23, F16L 37/00, F16L 37/34

(54) **Schnellverbindungskupplung mit Einrichtungen zum Vermeiden eines Austrittes der Flüssigkeit während eines Kupplungvorganges**
Quick-acting coupling with means for preventing fluid leakage during coupling
Raccord rapide avec moyens pour éviter d'une fuite de fluide

(30) Priorität: 25.05.2001 IT MI20011105
(43) Veröffentlichungstag der Anmeldung: 27.11.2002
(73) Patentinhaber: FASTER S.p.A., 20066 Melzo (Milano) (IT)
(72) Erfinder: AROSIO, Massimo, 26027 Rivolta d'Adda (IT)
(74) Vertreter: Mayer, Hans Benno

(56) Entgegenhaltungen:
- EP-A- 0 051 201
- EP-A- 0 862 010
- US-A- 5 103 868

## Beschreibung

Die vorstehende Erfindung betrifft eine Schnellverbindungskupplung in Flachausführung mit Einrichtungen zum Vermeiden eines Austrittes von Hydraulikflüssigkeit während eines Zusammenfüge- oder Trennvorganges.

Aus dem Stand der Technik ist der Einsatz von Schnellverbindungskupplungnen in sogenannter flacher Ausführung bekannt geworden. Diese Kupplungen bestehen aus einem rohrförmigen Bauteil oder auch aufnehmendem Bauteil genannt , die mit flexiblen Rohrleitungen zum Leiten einer unter Druck stehenden Hydraulikflüssigkeit verbunden sind.

Mit dem rohrförmig ausgebildeten Bauteil, welches Bestandteil der Schnellverbindungskupplung ist, kann ein zweites Bauteil, das im wesentlichen Zylinderform aufweist, verbunden werden.

Das zylinderförmige Bauteil kann über flexible Rohrleitungen mit einem Arbeitsgerät, z.B. einem Traktor, einer anderen Landmaschine oder einer Baumaschine, z.B. einem Bagger, verbunden werden.

Die vorgenannten Maschinen werden in üblicher Weise mit unterschiedlichen Hilfseinrichtungen ausgerüstet. Diese Hilfseinrichtungen werden an der Maschine angebaut oder von dieser abgebaut, je nach den bestehenden Bedürfnissen.

Für diese Vorgänge finden Schnellverbindungskupplungen in flacher Ausführung Einsatz. Diese stehen mit Rohrleitungen in Verbindung, welche die unter hohem Druck stehende Hydraulikflüssigkeit aufnehmen. Die zum Einsatz gelangenden Kupplungen ermöglichen ein Verbinden oder ein Lösen in rascher Weise, wobei die Hydraulikflüssigkeit in den Rohrleitungen unter Druck steht.

Mit der bekannten Schnellverbindungskupplung in Flachausführung besteht die Möglichkeit ein Zusammenfügen der Bauteile der Kupplung, ohne jegliche mechanische Schwierigkeiten, durchzuführen und dieser Verbindungsvorgang kann auch dann durchgeführt werden, wenn die Hydraulikflüssigkeit in den flexiblen Rohrleitungen unter Druck steht.

Zu diesem Zweck ist in den bekannten Schnellverbindungskupplungen im rohrförmigen oder im abstehenden Bauteil der Kupplung ein einstückig ausgebildetes, rohrförmiges, innenliegendes Schiebeteil vorgesehen, das gemäss dem Stand der Technik als einstückiges Bauteil ausgebildet ist.

Bei einer Schnellverbindungskupplung, die einen solchen Aufbau ausweist, wird aufgrund hydrostatischer Schubkräfte, die untereinander gleichen Wert haben, aber in entgegengesetzter Richtung wirksam werden, und sowohl im Inneren des rohrförmigen Bauteiles als auch im Inneren des abstehenden Bauteils auftreten, ein leichtes Verschieben des einstückig ausgebildeten Schiebeteiles möglich, das im Inneren des rohrförmigen Kupplungsteiles angeordnet ist.

Dieser Verschiebevorgang wird während einer Kupplungsbewegung durchgeführt, auch wenn erhebliche Drücke in den Rohrleitungen vorherrschen.

Die aus dem Stand der Technik her bekannte Schnellverbindungskupplung dieser Art weist den Nachteil auf, dass während der Bewegung des Schiebeteiles, das als einstückiges Bauteil im Inneren des rohrförmig ausgebildeten Kupplungstückes vorgesehen ist, eine kritische Lage unter den verschiedenen Bauteilen, zwischen dem Verschiebekörper und der vorgesehenen Ringdichtung, die im Inneren des rohrförmigen Bauteiles angeordnet ist, eintritt und dadurch das hydrostatische Gleichgewicht zwischen den verschiedenen Bauteilen der Schnellverbindungskupplung aufgehoben wird und sich eine Schubkraft einstellt, die sich in Axialrichtung erstreckt und zu einer ausserordentlich schnellen Verschiebebewegung des beweglichen Bauteiles und zu einem plötzliches Freilegen des Dichtungsringes führt, der im Inneren des rohrförmigen Bauteiles angeordnet ist.

Diese Tatsache führt bei der bekannten Schnellverbindungskupplung zu einem unerwünschten Austritt von Hydraulikflüssigkeit während eines jeden Zusammenfüge- oder Trennvorganges.

Des weiteren wird es unvermeidbar sein, besonders, wenn der Zusammenfügevorgang der Schnellverbindungskupplung häufiger erfolgt, dass ein Beschädigen des empfindlichen Dichtungsringes erfolgt, was zu einem unvermeidlichen Verlust an Hydraulikflüssigkeit führt.

Aus der gattungsbildenden US-PS 5.103.868 ist eine zweiteilige Kupplung bekannt geworden, in der Bauteile vorgesehen sind, die dazu dienen eine verbesserte Anlage eines Dichtungsringes an einer abzudichtenden Fläche bei Zunahme des Druckes in der Flüssigkeit zu schaffen; gleichzeitig soll eine Verminderung in der Anlage des Dichtungsringes an der abzudichtenden Fläche bei Fehlen eines Flüssigkeitsdruckes erreicht werden, um somit das Zusammenfügen sowie das Trennen der Kupplungsteile zu erleichtern.

Aufgabe der vorstehenden Erfindung ist es, die Nachteile des Standes der Technik zu vermeiden und eine neue Schnellverbindungskupplung vorzuschlagen, bei der keine unkontrollierte und plötzlich auftretende, vorzeitige Verschiebebewegung des innenliegenden Verschiebestückes erfolgt, und somit vermieden wird, dass die im Inneren des rohrförmig ausgebildeten Bauteiles angeordnete Ringdichtung von einer unter Druck stehenden Hydraulikflüssigkeit beeinflusst und bei sich wiederholenden Vorgängen eines Zusammenfüge- oder eines Trennvorganges der Bauteile der Schnellverbindungskupplung beschädigt wird.

Erfindungsgemäss werden diese Aufgaben mittels einer Schnellverbindungskupplung in Flachausführung gemäss Patentanspruch 1 gelöst.

Mit besonderem Vorteil besteht das Verschiebestück aus zwei Teilen, d.h. einem ersten rohrförmigen Bauteil, dessen vorderes Teil eine Führungs- und Verschiebefläche für einen Dichtungsring aufweist, der im Inneren des abstehenden und zu verbindenden Bauteiles angeordnet ist, wobei die Führungs- und Gleitflächen an einer Anschlagstufe enden, an der ein Federmittel anliegt und das erste rohrförmige Bauteil verschiebbar vom Vorderstück eines zweiten rohrförmigen Bauteiles aufgenommen wird und dieses zweite rohrförmige Bauteil eine Stufe aufweist, die vom Ende des ersten rohrförmigen Bauteiles beinflussbar ist, wobei das freie Ende des zweiten rohrförmgigen Bauteiles einen Kragen aufweist, der mit einem ringförmigen Vorsprung einer Überwurfhülse zusammenwirkt, die ortsfest angeordnet ist.

Ein weiterer Vorteil besteht darin, dass zwischen der inneren Fläche des ersten rohrförmigen Bauteiles und der Aussenfläche des zweiten rohrförmigen Bauteiles eine ringförmig ausgebildete Dichtung vorgesehen ist.

In vorteilhafter Weise ist zwischen dem vorderen Teil eines inneren Aufnahmesschaftes und dem ersten rohrförmigen Bauteil ein Dichtungsmittel vorgesehen.

Weiter hat es sich als vorteilhaft erwiesen, einen zentral angeordneten Aufnahmeschaft des rohrförmig ausgebildeten Bauteiles vorzusehen, der an seiner Vorderseite mit einer sich in Umfangsrichtung erstreckenden Stufe versehen ist, an der das vordere Ende des ersten, rohrförmigen Bauteiles anliegt, welches Bestandteil der verschiebbaren, zweiteiligen Einrichtung ist.

Weitere Vorteile der Erfindung können der nun folgenden Beschreibung, den Ansprüchen, sowie den beigefügten Zeichnungen entnommen werden.

Es zeigen:
Figur 1 die Bauteile der Schnellverbindungskupplung in flacher Ausführung im Schnitt und vor dem Zusammenfügevorgang;
Figur 2 die Schnellverbindungskupplung im Schnitt bei Beginn des Zusammenfügevorganges;
Figur 3 die Schnellverbindungskupplung während des Zusammenfügevorganges;

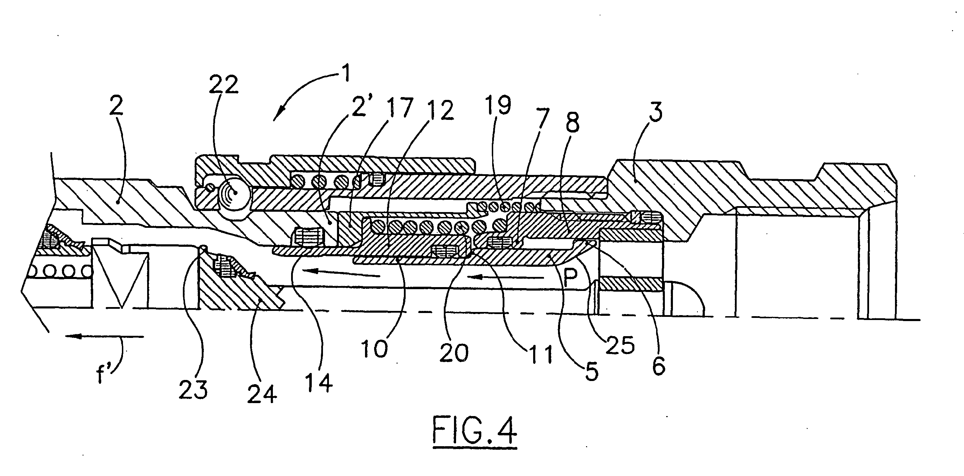

Figur 4 die Schnellverbindungskupplung nach durchgeführtem Zusammenfügevorgang.

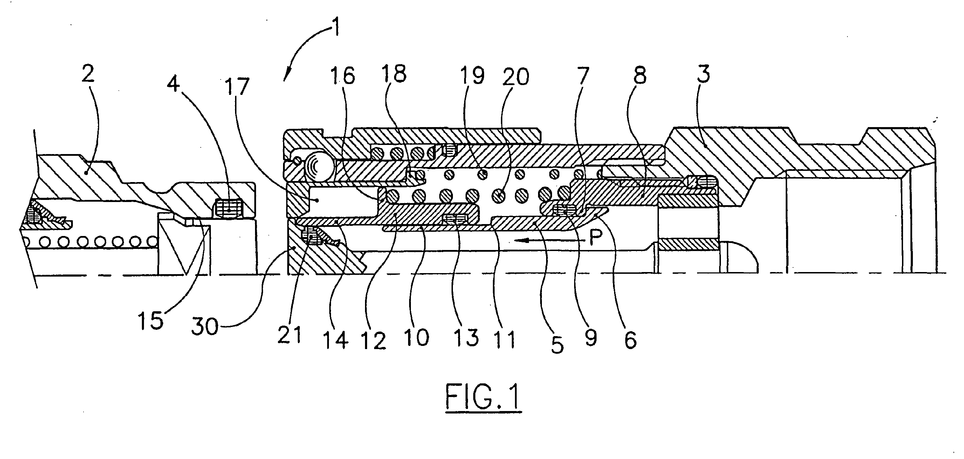

Wie der Figur 1 zu entnehmen ist, besteht die gesamthaft mit 1 gekennzeichnete Schnellverbindungskupplung aus einem abstehenden Bauteil 2 und einem hülsenförmigen Bauteil 3.

Beide Bauteile 2 und 3 sind üblicherweise am freien Ende von flexiblen Rohrleitungen angeordnet, in denen eine unter Druck befindliche Hydraulikflüssigkeit enthalten ist.

An der inneren, vorderen Seite weist das abstehende Bauteil 2 einen Dichtungsring 4 auf, der die Aufgabe hat, während des Zusammenfügens oder Trennens der Bauteile ein Austreten der unter einem Druck (P) stehenden Hydraulikflüssigkeit zu vermeiden.

Die Hydraulikflüssigkeit ist permanent im Inneren der Bauteile 2, 3 der Schnellverbindungskupplung 1 vorhanden.

Das hülsenförmige Bauteil 3 weist im Inneren ein Verschiebestück 5 auf. Dieses Verschiebestück 5 weist an seinem Ende, das zum Inneren des Bauteiles 3 ausgerichtet ist, eine ringförmige Verdickung 6 auf, die eine Stufe bildet, an der eine ringförmige Verdickung 7 anliegt, die an der Innenseite eines Stutzens der ortsfest vorgesehen ist, angeordnet ist.

Zwischen dem Verschiebestück 5 und der Stutzen 8 ist ein Dichtungsring 9 vorgesehen.

Das Verschiebestück 5 weist an seiner Vorderseite ein Rohrstück 10 auf, das eine dünnere Wand aufweist und einen kleineren Durchmesser hat und von einer Stufe absteht, die einen ringförmigen Anschluss 11 bildet. Das Rohrstück 10 des verschiebbaren, rohrförmigen Teiles 5 nimmt beweglich ein weiteres Verschiebeteil 12 auf.

Somit ist das Verschiebeteil 5 ungehindert gegenüber dem Stutzen 8 verschiebbar und nimmt ein weiteres, verschiebbares Bauteil 12 auf.

Zwischen dem Körper des verschiebbaren Bauteiles 12 und dem Rohrstück 10 des verschiebbaren Bauteiles 5 ist ein Dichtungsring 13 angeordnet.

Das rückwärtige Ende des Bauteils 12 ist mit grösserer Wandstärke ausgebildet, wogegen das vordere Teilstück des Verschiebeteiles 12 mit verminderter Wanddicke ausgebildet ist.

Der Durchmesser des vorderen Teiles 14 des Bauteils 12 ist so gewählt, dass dem Bauteil 14 die Möglichkeit bleibt, ungehindert in die Öffnung 15 einzudringen, welche das abstehende Bauteil 2 durchdringt, ohne dabei die Dichtung 4 zu beschädigen, sondern als Führungsteil aufzutreten und eine abgedichtete Zone zu schaffen, die ihre Wirkung bereits während der Bewegungen beim Zusammenfügen des abstehenden Bauteiles 2 und des rohrförmigen Bauteiles 3 entfaltet.

Zwischen dem dünnwandig ausgebildeten Ende 14 und dem, eine dickere Wandung aufweisenden Ende des verschiebbaren Bauteiles 12 wird eine Stufe oder ein Anschlag 16 gebildet, gegen den eine ringförmige Verdickung 17 angedrückt wird, die Bestandteil eines weiteren, verschiebbaren Bauteiles 18 ist, welches in Ruhelage durch eine Feder 19 gehalten wird. Die Stufe oder der Anschlag 16 bilden gleichzeitig eine Anlagefläche für das Endstück eines Federmittels 20.

Am vorderen Ende eines fest angeordneten, schaftförmigen Bauteils 30, welches für Schnellverbindungskupplungen in Flachausführung üblich ist, und welches das hülsenförmige Bauteil 3 durchdringt, ist eine ringförmige Dichtung 21 angeordnet, die an der äusseren Fläche der dünner ausgebildeten Wand 14 des Bauteils 12 anliegt.

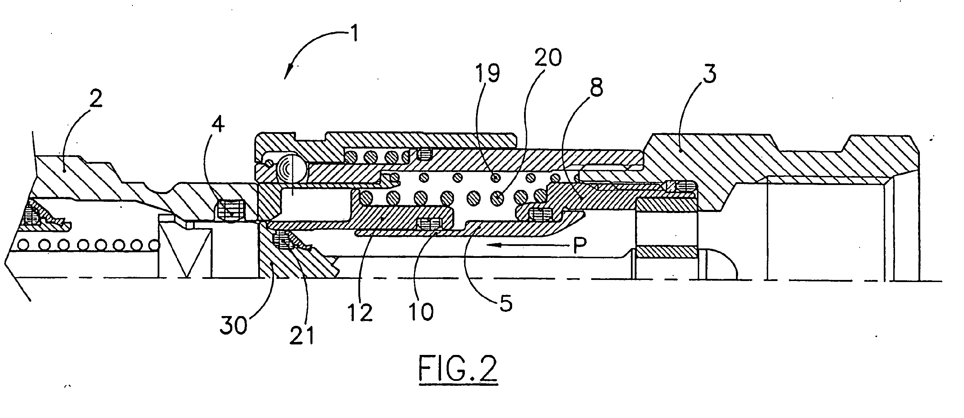

In Figur 2 ist die Schnellverbindungskupplung 1 kurz vor dem Zusammenfügen des abstehenden Bauteiles 2 und des hülsenförmigen Bauteiles 3 dargestellt.

Alle verschiebbaren Bauteile sowie weitere Komponenten befinden sich noch in ihrer Ruhelage, wie bereits vorher beschrieben und in Figur 1 dargestellt.

Im Inneren des abstehenden Bauteiles 2 sowie im Inneren des hülsenförmigen Bauteiles 3 ist die Hydraulikflüssigkeit (P) unter hohem hydrostatischen Druck vorhanden.

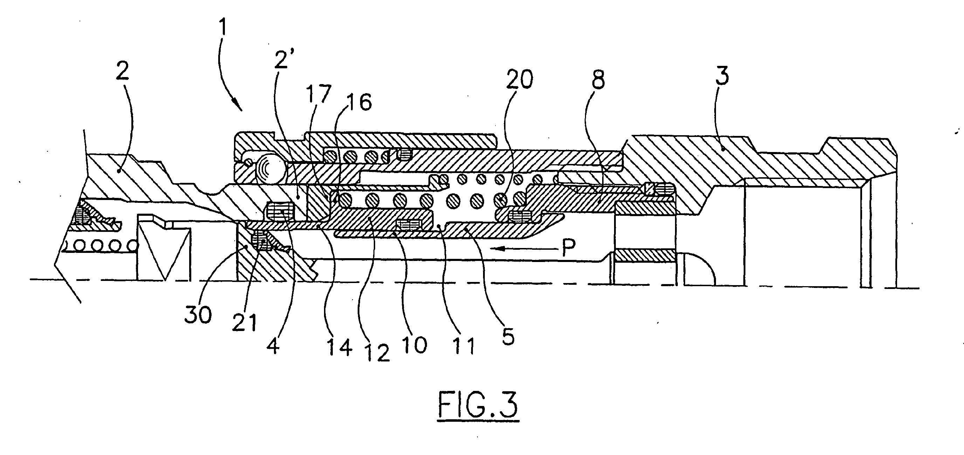

In Figur 3 ist die Schnellverbindungskupplung 1 in einer Lage dargestellt, in der das Bauteil 2 teilweise in das hülsenförmige Bauteil 3 eingefügt ist.

Das vordere Stück 2' des abstehenden Bauteiles 2 wurde bereits in die rohrförmige Kammer des hülsenförmig ausgebildeten Bauteiles 3 eingeführt, und das verschiebbare Bauteil 5 befindet sich noch in seiner ursprünglichen Lage. Das gleiche gilt auch für das verschiebbare Bauteil 12.

Es kann festgestellt werden, dass die Dichtung 4 bereits auf der Aussenfläche der vorderen Wand 14 des verschiebbaren Bauteiles 12 angeordnet und geführt ist, und ferner wird ersichtlich, dass das rückwärtige Ende der Verdickung 17 bereits mit der ringförmigen Stufe 16 des beweglichen Bauteiles 12 in Kontakt getreten ist und durch die Feder 20 beeinflusst wird.

In dieser Stellung ist das abstehende Bauteil 2 über eine formschlüssige Verbindung mit dem hülsenförmigen Bauteil verbunden. Dank der Vorsehung der Dichtungen 4 und 21 sind die Bauteile 2, 3 der Schnellverbindungskupplung bereits unter vollständiger Abdichtung miteinander verbunden.

Es ist darauf hinzuweisen, dass in dieser Verbindungsstellung noch kein Durchfluss der Hydraulikflüssigkeit vom Bauteil 3 zum Bauteil 2 oder umgekehrt erfolgt.

Nach Beenden des Zusammenfügevorganges der Schnellverbindungskupplung 1 durch vollständiges Einfügen des abstehenden Bauteiles 2 in das hülsenförmige Bauteil (wobei die Teile gegeneinander, unter Zuhilfenahme eines bekannten Kugelringes 22, der für derartige Schnellverbindungskupplung bekannt und üblich ist, blockiert werden) wird erreicht, dass das vordere Ende 2' des abstehenden Teiles 2 auf die ringförmige Verdickung 17 einwirkt, und dadurch das bewegliche Bauteil 12 weiter in das Innere des hülsenförmige Bauteiles 3 verschoben wird.

Dadurch wird erreicht, dass das innere Ende des verschiebbaren Bauteils 12 die Stufe 11 des verschiebbaren Bauteiles 5 erreicht und während des Verschiebevorganges des Teiles 5, die ringförmige Verdickung 6 von der Anschlagstufe 7 der ortsfest angeordneten Hülsen 8 entfernt wird.

Sofern es erwünscht ist, das abstehende Bauteil 2 erneut vom hülsenförmigen Bauteil 3 zu trennen, werden die bisher beschriebenen Bewegungen in entgegengesetzter Richtung wiederholt.

Durch Lösen des abstehenden Bauteiles 2 von der mit Kugeln 22 bestückten Halteeinrichtung besteht die Möglichkeit, das abstehende Bauteil 2 in Richtung des Pfeiles (f) zu bewegen.

Diese Bewegung bewirkt, dass auch die bekannte, verschiebbare Verdickung 17 unter Einwirken der sich ausdehnenden Feder in Richtung des Pfeiles (f) verschoben wird und demzufolge auch das verschiebbare Bauteil 12 unter dem Einfluss der Feder 20 in Richtung des Pfeiles (f) bewegt wird solange, bis das freie Ende der Wand 14 den Anschlag 23 der Stufe erreicht. Der Anschlag ist am Ende des mittig angeordneten Schaftes 24 vorgesehen.

Wie den Zeichnungen ferner zu entnehmen ist, wird das in Radialrichtung innen vorgesehene Bauteil 5 von keinem Federmittel beeinflusst, um eine sichere Rücklaufbewegung des Bauteiles 5 zu erreichen.

In vorteilhafter Weise weist das Bauteil an seinem freien Ende eine ringförmige, geneigte Fläche 25 auf, die als Führungsfläche dient, auf die unter Druck stehende Flüssigkeit einwirkt und in wirkungsvoller Weise und automatisch das verschiebbare Bauteil 5 in Richtung der Pfeils (f) bewegt.

Wesentlich ist es, dass weder während des Zusammenfügenoch während des Trennvorganges der Bauteile der Schnellverbindungskupplung in Flachausführung Leckverluste aufgrund austretender Hydraulikflüssigkeit entstehen oder eine Beschädigung der Dichtung 4, die im Inneren des abstehenden Bauteiles 2 vorgesehen ist, zu befürchten ist.

## Patentansprüche

1. Schnellverbindungskupplung (1) mit Flachanschluss und Bauteilen zur Vermeidung eines Austrittes der Hydraulikflüssigkeit während des Verbinde- bzw. Lösevorganges, mit einem hülsenförmigen Bauteil (3), das eine innenliegende Muffe aufweist, die aus zwei Bauteilen (5, 12) besteht, die konzentrisch und verschiebbar zueinander angeordnet sind,
**dadurch gekennzeichnet,**
**dass** die Muffe (5, 12) von einem ersten rohrförmigen Bauteil (12) gebildet ist, dessen vorderes Teilstück eine Führungs- und Gleitfläche (14) für einen Dichtungsring (4) aufweist, der im Inneren eines abstehenden und zu verbindenden Bauteiles (2) angeordnet ist, und die Führungs- und Gleitfläche (14) in einem Anschlag (16) endet, auf den ein Federmittel (20) einwirkt, und das erste rohrförmige Bauteil (12) verschiebbar von dem Vorderteil (10) eines zweiten rohrförmigen Bauteils (5) aufgenommen wird, das eine Stufe (11) aufweist, die vom Ende des ersten rohrförmigen Bauteils (12) beeinflussbar ist, und das freie Ende des zweiten rohrförmigen Bauteils (5) eine Verdickung (6) aufweist, die mit einer ringförmigen Verdickung (7) eines Stutzens (8), der ortfest angeordnet ist, zusammenwirkt.

2. Schnellverbindungskupplung nach Patentanspruch 1,
**dadurch gekennzeichet,** dass zwischen der inneren Fläche des ersten rohrförmigen Bauteiles (12) und der äusseren Fläche des zweiten rohrförmigen Bauteiles (5) ein Dichtungsring (13) vorgesehen ist.

3. Schnellverbindungskupplung nach Patentanspruch 1,
**dadurch gekennzeichet,** dass zwischen dem inneren Schaft (24) und dem ersten rohrförmigen Bauteil (12) eine Dichtung (21) vorgesehen ist.

4. Schnellverbindungskupplung nach Patentanspruch 1,
**dadurch gekennzeichet,** dass der zentral angeordnete Schaft (24) des hülsenförmigen Bauteiles (3) an seiner Vorderseite eine umlaufende Anschlagstufe (23) aufweist, an der das vordere Ende der dünner ausgeführten Wand (14) des ersten rohrförmigen Bauteiles (12) der Muffe zur Anlage kommt.

5. Schnellverbindungskupplung nach Patentanspruch 1,
**dadurch gekennzeichet,** dass das freie Ende des rohrförmigen Bauteiles (5) eine ringförmige, trichterartige Fläche (25) aufweist, auf die unter Druck stehende Hydraulikflüssigkeit (P) einwirkt.

## Claims

1. Rapid-connection coupling (1), having a flange connection and components for preventing an escape of hydraulic fluid during the connection and release operations, and having a sleeve-shaped component (3), which has an inner bushing consisting of two components (5, 12) disposed in mutually concentric and mutually displaceable arrangement, **characterized in that** the bushing (5, 12) is formed by a first tubular component (12), the front part piece of which has a guide and slide surface (14) for a sealing ring (4) disposed inside a remote component (2) to be connected, and the guide and slide surface (14) ends in a stop (16), which is acted upon by a spring means (20), and the first tubular component (12) is received in a displaceable manner by the front part (10) of a second tubular component (5), which has a step (11) which can be influenced by the end of the first tubular component (12), and the free end of the second tubular component (5) has a thickening (6) which cooperates with an annular thickening (7) of a fixed connecting branch (8).

2. Rapid-connection coupling according to Patent Claim 1, **characterized in that** a sealing ring (13) is provided between the inner surface of the first tubular component (12) and the outer surface of the second tubular component (5).

3. Rapid-connection coupling according to Patent Claim 1, **characterized in that** a seal (21) is provided between the inner shank (24) and the first tubular component (12).

4. Rapid-connection coupling according to Patent Claim 1, **characterized in that** the centrally disposed shank (24) of the sleeve-shaped component (3) has on its front side a circumferential butt step (23), against which the front end of the more thinly constructed wall (14) of the first tubular component (12) of the bushing comes to bear.

5. Rapid-connection coupling according to Patent Claim 1, **characterized in that** the free end of the tubular component (5) has an annular, funnel-like surface (25), which is acted upon by pressurized hydraulic fluid (P).

## Revendications

1. Raccord rapide (1) avec raccordement plat et composants pour éviter la sortie d'un liquide hydraulique pendant l'opération d'assemblage ou de déconnexion, comprenant un composant en forme de douille (3) qui présente un manchon situé à l'intérieur, qui se compose de deux composants (5, 12) qui sont disposés concentriquement et de manière à pouvoir coulisser l'un par rapport à l'autre,
**caractérisé en ce que**
le manchon (5, 12) est formé par un premier composant de forme tubulaire (12) dont la pièce partielle avant présente une surface de guidage et de glissement (14) pour une bague d'étanchéité (4) qui est disposée à l'intérieur d'un composant (2) saillant et devant être connecté, et la surface de guidage et de glissement (14) se termine par une butée (16) sur laquelle agit un moyen de ressort (20) et le premier composant de forme tubulaire (12) est reçu de manière à pouvoir coulisser depuis la partie avant (10) d'un deuxième composant de forme tubulaire (5) qui présente un gradin (11) qui peut être influencé par l'extrémité du premier composant de forme tubulaire (12) et l'extrémité libre du deuxième composant de forme tubulaire (5) présente un épaississement (6) qui coopère avec un épaississement de forme annulaire (7) d'une tubulure (8) qui est disposée fixement.

2. Raccord rapide selon la revendication 1,
**caractérisé en ce que** l'on prévoit une bague d'étanchéité (13) entre la surface interne du premier composant de forme tubulaire (12) et la surface externe du deuxième composant de forme tubulaire (5).

3. Raccord rapide selon la revendication 1,
**caractérisé en ce que** l'on prévoit un joint d'étanchéité (21) entre la tige interne (24) et le premier composant de forme tubulaire (12).

4. Raccord rapide selon la revendication 1,
**caractérisé en ce que** la tige (24) disposée centralement du composant en forme de douille (3) présente sur son côté avant un gradin de butée périphérique (23) contre lequel l'extrémité avant de la paroi plus mince (14) du premier composant de forme tubulaire (12) du manchon vient en butée.

5. Raccord rapide selon la revendication 1,
**caractérisé en ce que** l'extrémité libre du composant de forme tubulaire (5) présente une surface de forme annulaire, de type entonnoir (25) sur laquelle agit du liquide hydraulique sous pression (P).
